# EUROPÄISCHE PATENTSCHRIFT

(11) **EP 0 402 538 B1**
(45) Veröffentlichungstag und Bekanntmachung des Hinweises auf die Patenterteilung: **08.03.1995**
(21) Anmeldenummer: 89203346.5
(22) Anmeldetag: 16.06.1989
(51) Int. Cl.: G11B 5/024, G11B 5/09, G11B 19/04

(54) **Löscheinrichtung für einen Magnetschichtspeicher mit Relativbewegung**
Erasing device for a relatively moving magnetic layer memory
Dispositif d'effacement pour une mémoire à couche magnétique, en déplacement relatif

(43) Veröffentlichungstag der Anmeldung: 19.12.1990
(73) Patentinhaber: TANDBERG DATA A/S, 0808 Oslo 8 (NO)
(72) Erfinder: Pahr, Per Olaf, N-3400 Lier (NO)
(74) Vertreter: Goddar, Heinz J., Dr.

(56) Entgegenhaltungen:
- DE-A- 3 008 692
- FR-A- 1 046 056
- US-A- 3 354 270
- US-A- 3 480 739
- US-A- 4 466 027
- SOVIET INVENTIONS ILLUSTRATED, Woche 8751, Dezember 1987, Section EL, DerwentPublications Ltd, London, GB; & SU-A-1 310 892 (BORISOV)
- PATENT ABSTRACTS OF JAPAN, Band 13, Nr. 54 (P-824)[3402], 8. Februar 1989;& JP-A-63 244 402 (SONY CORP.) 11-10-1988
- PATENT ABSTRACTS OF JAPAN, Band 12, Nr. 331 (P-755)[3178], 7. September 1988;& JP-A-63 094 406 (SONY CORP.) 25-04-1988
- IBM TECHNICAL DISCLOSURE BULLETIN, Band 17, Nr. 5, Oktober 1974, Seite 1265,New York, US; K.L. JEFFRIES: "Symmetric AC bias signal for analog magneticrecording"
- PATENT ABSTRACTS OF JAPAN, Band 8, Nr. 245 (P-312)[1682], 10. November 1984;& JP-A-59 119 515 (SUWA SEIKOSHA K.K.) 10-07-1984
- PATENT ABSTRACTS OF JAPAN, Band 9, Nr. 221 (P-386)[1944], 7. September 1985;& JP-A-60 080 108 (HITACHI SEISAKUSHO K.K.) 08-05-1985

## Beschreibung

Die Erfindung bezieht sich auf eine Löscheinrichtung für einen Magnetschichtspeicher mit Relativbewegung.

Es ist eine Vielzahl von Anwendungsfällen bekannt, bei denen Ton-, Bild- oder Dateninformation löschbar auf einem Magnetschichtspeicher, der als Magnetband oder als Magnetplatte ausgebildet ist, gespeichert wird. Zum Aufzeichnen bzw. Lesen von Information wird das Speichermedium relativ zu einem magnetischen Schreib/Lesekopf bewegt. Beim Aufzeichnungsvorgang bewirkt der durch den Magnetkopf fließende, informationsabhängig modulierte Spulenstrom eine entsprechend wechselnde remanente Magnetisierung auf dem Speichermedium. Umgekehrt wird beim Lesevorgang durch die remanente Magnetisierung auf dem Speichermedium im Magnetkopf eine Spannung induziert, deren Signalform der gespeicherten Information entspricht. Magnetschichtspeicher mit Relativbewegung werden im allgemeinen als wiederbeschreibbare Speicher eingesetzt, d. h. daß gespeicherte Information in vorbestimmten Bereichen des Speichermediums oder auch vollständig gelöscht werden muß. Dazu ist außer dem Lese/Schreibkopf ein separater Löschkopf mit individueller Ansteuerung vorgesehen.

Bei der Vielzahl von Anwendungsfällen von Magnetschichtspeichern mit Relativbewegung ist auch eine Mehrzahl von Einrichtungen zum Löschen gespeicherter Information bekannt. Die einfachste Lösung, gespeicherte Information zu löschen, besteht darin, dem Löschkopf einen Gleichstrom zuzuführen und damit ein magnetisches Gleichfeld zu erzeugen, das auf dem vorbeigeführten Speichermedium eine gleichförmige Magnetisierung aller Magnetpartikel mit einer vorgegebenen Polarität bewirkt. Dieses Löschverfahren ist, abgesehen von Sonderfällen, aus später noch zu erläuternden Gründen in der Praxis ohne wesentliche Bedeutung. Die folgende Betrachtung bezieht sich daher auf alle die Fälle, in denen mit dem Löschkopf ein magnetisches Wechselfeld erzeugt wird, das auf dem vorbeilaufenden Speichermedium, statistisch betrachtet, eine zufällig verteilte magnetische Orientierung der einzelnen Magnetpartikel hervorruft, so daß auf dem gelöschten Bereich des Speichermediums, auch lokal betrachtet, keine magnetischen Vorzugsrichtungen mehr detektierbar sind.

Die älteste Ausführungsform für einen magnetischen Löschkopf ist von Tonbandgeräten her bekannt. Hier ist der Löschkopf aus zwei Kernhälften aufgebaut, die jeweils eine von zwei untereinander in Serie geschalteten Teilwicklungen tragen. Dies kann man, vereinfacht betrachtet, als Löschkopf mit einer einzigen Magnetspule betrachten, deren Resonanzfrequenz auf die Löschfrequenz abgestimmt ist.

Dieser Löschkopfaufbau mit einer einzigen, einseitig geerdeten Magnetspule ist konventionell nur bei Magnetbandgeräten für Audioaufzeichnungen eingesetzt. Dies ist darauf zurückzuführen, daß die Löschfrequenzen in diesem Anwendungsfall um Größenordnungen niedriger sind als bei anderen Anwendungsfällen, beispielsweise bei magnetischen Datenspeichern. Bei letzteren liegen die Löschfrequenzen in einem Bereich von 5 MHz und darüber, während für Anwendungen im Hörbereich auch bei Hi-Fi-Qualität Löschfrequenzen von bis zu 25 kHz vollständig ausreichen. Bei Löschköpfen, die mit ihrer Resonanzfrequenz auf derartig niedrige Löschfrequenzen abgestimmt sind, lassen sich hohe Spulengüten Q erzielen, so daß infolgedessen auch mit einem niedrigen Löschstrom gearbeitet werden kann. Dies wiederum bedeutet, daß die auf niedrige Ströme abgestimmte Ansteuerschaltung für den Löschkopf einfach und kostengünstig aufzubauen ist, denn Filter und verzerrungsarme Verstärker können entsprechend ausgelegt werden.

Diese Vorteile gelten nicht mehr für Löschköpfe mit hohen Löschfrequenzen, wie sie beispielsweise bei Magnetdatenspeichern eingesetzt werden müssen. Außerdem wirkt sich in solchen Anwendungsfällen insbesondere auch eine weitere Eigenschaft des Löschkopfes mit einer einzigen Magnetspule aus, die auf dessen einseitige Erdung zurückzuführen ist. Diese Erdverbindung im Rückflußzweig verursacht eine relativ lange Schleife, die bei Löschköpfen mit hoher Löschfrequenz die Ursache für elektromagnetische Störstrahlung ist, die auch bei sehr sorgfältig hergestellten Masseverbindungen nur schwer beherrschbar ist.

Bei Magnetdatenspeichern werden daher die Löschköpfe üblicherweise mit einer mittenangezapften Magnetspule versehen. An die beiden Spulenenden sind Schaltelemente angeschlossen, während der Mittenanzapfung eine Gleichspannung zugeführt wird. Die Schaltelemente, vorzugsweise Schalttransistoren, werden durch komplementäre Schaltsignale angesteuert, die damit wechselseitig eines der Spulenenden an Masse oder auch an ein Potential legen, das üblicherweise kleiner ist als die der Mittelanzapfung zugeführte Gleichspannung. Die wechselseitige Einschaltdauer der beiden Schaltelemente beträgt im Idealfall jeweils 50 % einer Schaltperiode. Am Ende jeder Hälfte der Schaltperiode wird damit die Richtung des von der Magnetspule erzeugten Magnetfeldes umgekehrt. Auf diese Weise wird am Spalt des Löschkopfes ein magnetisches Wechselfeld erzeugt. Ein Beispiel für diese Ausführungsform eines magnetischen Löschkopfes samt seiner Ansteuerschaltung ist aus US-A-4,466,027 bekannt.

Ein Problem bei dieser bekannten Ausgestaltung magnetischer Löschköpfe ist, daß die angestrebte Symmetrie der beiden Teilwicklungen seiner Magnetspule nur unvollkommen realisierbar ist. Diese in der Praxis auftretende Unsymmetrie ist mit wachsender Windungszahl leichter beherrschbar. Aber bei hochfrequenten Löschköpfen mit mittenangezapfter Magnetspule muß man die Windungszahl herabsetzen, so daß sich Wicklungsfehler um so mehr auswirken. Neben der an sich hohen Löschfrequenz ist zudem noch zu berücksichtigen, daß die Eigenresonanz der Magnetspule üblicherweise mindestens etwas über der Löschfrequenz liegt, um einen Abgleichspieflaum für den Ausgleich von Herstellungstoleranzen hinsichtlich dieser Resonanzfrequenz w besitzen. Unsymmetrie ist aber auch darauf zurückzuführen, daß die Magnetspule aus Kostengründen üblicherweise bifilar gewickelt wird. Zusätzlich wirkt sich hier noch die bei einer bifilaren Wicklung unvermeidbar höhere Streukapazität aus.

Wegen der Bedeutung der Symmetrie auf den Löschvorgang ist es zweckmäßig, dieses Problem noch etwas detaillierter zu erläutern. Jedes magnetische Speichermedium ist, wie sich bereits aus der Hysteresekurve ergibt, ein Medium mit ausgeprägten nichtlinearen Eigenschaften. Es ist der Zweck jeder Löschanordnung, ein starkes Magnetfeld zu erzeugen, welches in das Speichermedium mit einer magnetischen Feldstärke voll eindringt, die möglichst weitgehend der Sättigungsmagnetisierung entspricht, so daß alle magnetischen Partikel, d. h. Lokalmagnete gesättigt werden. Da das Speichermedium relativ zum Löschkopf bewegt wird, muß die Wechselfrequenz des löschenden Magnetfeldes im Vergleich zu dieser Relativgeschwindigkeit ausreichend hoch gewählt werden. Nur dann ist sicherzustellen, daß die Magnetisierung der einzelnen Lokalmagneten, im statistischen Mittel gesehen, keine Vorzugsrichtung aufweist. Dies läßt sich aber nur erreichen, wenn die Einschaltzeiten der beiden Schaltelemente möglichst identisch sind und außerdem auch die Feldstärken der beiden Komponenten des magnetischen Wechselfeldes dem Betrage nach möglichst exakt übereinstimmen. Ist nur eine dieser beiden Bedingungen nicht ausreichend erfüllt, dann wird beim Löschvorgang die gewünschte statistische Verteilung der Magnetisierungsrichtung der Lokalmagnete, d. h. globaler betrachtet, einer ungerichteten Magnetisierung nicht erreicht und stattdessen eine Gleichfeldkomponente aufgezeichnet.

Bezüglich eines bestimmten Punktes auf dem Speichermedium läßt sich derselbe Sachverhalt auch so betrachten: Auf das Speichermedium wirkt punktweise ein magnetisches Wechselfeld ein, dessen Feldstärkevektor umgekehrt proportional zur Zeit ist. Um die gewünschten Bedingungen zu erfüllen, muß das Spektrum dieser Strahlung so aus sinusförmigen Oberwellen zusammengesetzt sein, daß alle Oberwellen 2n-ter Ordnung Null sind, wobei n eine ganze, positive Zahl ist.

Der Grund für diese strengen Anforderungen ist, daß bekanntlich - wie auch in der obengenannten US-A-4,466,027 ausgeführt - jeder verbleibende Gleichfeldanteil beim Wiederaufzeichnen neuer Information Störungen verursacht. Bei der Aufzeichnung von Analoginformation ergeben sich durch die Überlagerung des remanenten Gleichfeldanteiles mit dem aufzuzeichnenden analogen Signal Signalverzerrungen, bei digitaler Aufzeichnung wirkt sich dies als die bekannte Spitzenwertverschiebung aus.

Allerdings ist dies nur eine der Einflußgrößen für die in der Praxis auftretende Spitzenwertverschiebung. Allgemein ausgedrückt, ist die Spitzenwertverschiebung abhängig von der aufgezeichneten Wellenlänge, d. h. auch beeinflußt vom verwendeten Aufzeichnungsverfahren und bekanntlich auch von der Bandbreite des Lesekanals. Beispielsweise ist die Spitzenwertverschiebung bei einem Lesekanal mit einer schmalen Bandpaßcharakteristik am höchsten bei langwelligen Signalanteilen. Schließlich wird der Grad der Spitzenwertverschiebung auch durch die Amplitude eines Vormagnetisierungsstromes beeinflußt, falls beim Aufzeichnungsvorgang eine Vormagnetisierung eingesetzt wird, um diesen zu linearisieren. Auch die Koerzitivität des Speichermediums und der Temperaturgang beim Betrieb des Speichergerätes beeinflussen den Grad der Spitzenwertverschiebung. Wegen der Vielzahl dieser Einflußgrößen können im ungünstigen Fall sehr schnell nicht mehr zulässige Werte der Spitzenwertverschiebung erreicht werden. Es ist daher wichtig, den Einfluß jeder möglichen Störgröße zu minimieren.

Im vorliegenden Zusammenhang ist beispielsweise aus "Magnetic Recording", Vol. II: "Computer Data Storage", herausgegeben von C. Denis Mee und Eric D. Daniels bei Mc Graw-Hill, 1988, Seite 206 der Einfluß von Gleichfeldkomponenten auf die Aufzeichnungsqualität bekannt. Beispielsweise wird beim NRZI-Aufzeichnungsverfahren, systembedingt, ständig eine nicht vernachlässigbare Gleichstromkomponente als Teil des Spektrums der aufzuzeichnenden Signale mit aufgezeichnet, d. h. auch bei diesem Aufzeichnungsverfahren sind bereits an sich im Aufzeichnungssignal eine Gleichstromkomponente oder auch niederfrequente Signalkomponenten mit nicht mehr vernachlässigbarer Amplitude enthalten. Es ist unmittelbar einzusehen, daß sich jede nach dem Löschvorgang auf dem magnetischen Speichermedium verbleibende Gleichfeldmagnetisierung dann als Störgröße bei der Signalaufzeichnung auswirkt, weil sie sich den genannten Signalkomponenten überlagert.

Schließlich ist noch auf einen anderen Umstand hinzuweisen, der beim Schaltungsentwurf beispielsweise von Kassettenmagnetbandgeräten für die Datenspeicherung, aber auch bei batteriebetriebenen Tonbandgeräten eine Rolle spielt. Bei den erstgenannten Peripheriespeichergeräten stehen üblicherweise als Versorgungsspannungen lediglich + 5 V und + 12 V zur Verfügung. Analoges gilt auch bei batteriebetriebenen Ton- bzw. Videobandgeräten. Dies bedeutet eine Beschränkung hinsichtlich der Bauelementeauswahl. Schließlich versucht man auch aus Kostengründen bei einem Löschkopf mit hoher Löschfrequenz die Spulenimpedanz möglichst auf einen hohen Wert zu optimieren und den erforderlichen Spulenstrom möglichst niedrig zu halten. Erst bei niedrigem Spulenstrom ist es möglich, billigere Schalttransistoren im Ansteuerkreis einzusetzen. Dies gilt insbesondere dann, wenn die Ansteuerschaltung als integrierter Schaltkreis aufgebaut werden soll, da bei integrierten Schaltkreisen häufig die zulässige Strombelastung noch niedriger ist als bei diskreten Bauelementen.

Aus den Patent Abstracts of Japan, Bd. 13, Nr. 54 (P-824) [3402], 1989, und der zugehörigen JP-A 63-244 402 ist eine Schaltung bekannt, mit der ein magnetisches Aufzeichnungssignal erzeugt werden kann. Dabei werden die Datenbitfolgen an die Steuereingänge von Schaltanordnungen gelegt, die abwechselnd schalten und letztlich die gewünschte Ausrichtung der magnetischen Teilchen im Speichermedium bewirken.

Aus dem IBM TECHNICAL DISCLOSURE BULLETIN, Bd. 17, Nr. 5, Oktober 1974, Seite 1265 ist es bekannt, bei einer Quadratwelle die Verzerrungen gerader Ordnung durch eine Teiledurch-Zwei-Schaltung auszuschalten.

Aus FR-A- 1 046 056 ist bekannt, daß Oberwellen gerader Ordnung im Löschfeld vermieden werden sollen.

Der Erfindung liegt die Aufgabe zugrunde, eine Löscheinrichtung für einen für hohe Löschfrequenzen geeigneten Löschkopf sowie eine daran angepaßte Ansteuerschaltung zu schaffen, die es bei einer aufwandarmen Stromversorgung mit einfachen Mitteln ermöglicht, am Spalt des Löschkopfes ein magnetisches Wechselfeld ausreichender Feldstärke, jedoch geringem Anteil an störenden Signalkomponenten 2n-ter Ordnung zu erzeugen.

Diese Aufgabe wird von einer Löscheinrichtung nach Anspruch 1 gelöst.

Im Schaltungsaufbau ist die erfindungsgemäße Lösung von einer bestechenden Einfachheit. Es werden zwei, vorzugsweise großzügig dimensionierte Induktivitäten im Ansteuerschaltkreis für den Löschkopf eingesetzt, die in Verbindung mit den alternativ aktivierten Schaltstufen einen Gleichstrom/Wechselstromwandler schaffen, der eine symmetrische Treiberschaltung für den Löschkopf bildet. Dabei wird das Wechselstromverhalten der Induktivitäten insbesondere dazu ausgenutzt, in weitem Umfang unabhängig von der Versorgungsgleichspannung auch trotz der relativ hohen Wechselstromimpedanz des Löschkopfes einen ausreichend hohen Löschwechselstrom zu generieren. Diese Eigenschaft ist für die Flexibilität der erfindungsgemäßen Löscheinrichtung von besonderem Interesse, sie erlaubt damit eine erfindungsgemäß ausgebildete Löscheinrichtung in den verschiedensten Anwendungsfällen auch mit unterschiedlichen Löschfrequenzen bei in weitem Umfang freizügiger Wahl der Versorgungsspannung einzusetzen, ohne daß deswegen das Schaltungsprinzip verändert werden müßte.

Gemäß einer Weiterbildung der Erfindung ist der Spulenwicklung des Löschkopfes ein Abgleichkondensator parallel geschaltet, wobei dieser so dimensioniert ist, daß er in Verbindung mit der Induktivität und der Streukapazität des Löschkopfes einen Parallelresonanzkreis bildet, dessen Eigenresonanz auf die Löschfrequenz abgestimmt ist. Diese Abstimmung erfolgt vorzugsweise derart, daß die erzwungene Eigenresonanz des Löschkopfes etwas höher liegt als die Löschfrequenz. Damit ist ein gewisser Toleranzbereich geschaffen, der Fertigungstoleranzen ausgleicht. Dieser Parallelresonanzkreis hat darüber hinaus eine weitere Funktion. Er wirkt sich in Verbindung mit der Ansteuerschaltung für den Löschkopf in der Weise symmetrierend auf die Löschfunktion aus, daß im Löschstrom und damit im erzeugten Löschmagnetfeld harmonische Oberwellenanteile 2n-ter Ordnung unterdrückt werden.

Gemäß einer anderen Weiterbildung der Erfindung kann diese Unterdrückung störender Oberwellenanteile dadurch noch weiter verbessert werden, daß zwischen der Ansteuerschaltung und dem Löschkopf ein symmetrisches Oberwellenfilter angeordnet ist. Auch wenn dieses Oberwellenanteile sowohl gerader als auch ungerader Ordnung unterdrückt, bedeutet dies keinen einschränkenden Nachteil. Bei dem Schaltungsprinzip der erfindungsgemäßen Lösung ist eine ausreichende Reserve für die Festlegung der Amplitude des Löschstromes als solche gegeben.

Schließlich kann gemäß einer weiteren Weiterbildung der Erfindung diese für den Löschvorgang so wesentliche Eigenschaft der Symmetrie dadurch weiter verbessert werden, daß mit Hilfe eines D-Flipflops mit kurzen Schaltverzögerungen die beiden, die Schaltstufen jeweils alternativ aktivierenden Steuerimpulsfolgen lokal aus einer einzigen Taktimpulsfolge abgeleitet werden. Dabei ist es insbesondere vorteilhaft, die Funktion dieses D-Flipflops mit einem weiteren Flipflop zu überwachen und zugleich das die Taktsignalfolge untersetzende D-Flipflop symmetrisch zu belasten. Beide Flipflops bilden vorzugsweise einen gemeinsamen integrierten Schaltkreis. Das Schaltverhalten des Hilfsflipflops kann mit Hilfe eines Spitzenwertdetektors kurzer Erholungszeit bewertet werden, um nur dann die Löscheinrichtung zu aktivieren, wenn das die Taktimpulsfolge untersetzende erste D-Flipflop ordnungsgemäß arbeitet.

Ausführungsbeispiele der Erfindung werden im folgenden anhand der Zeichnung näher beschrieben. Dabei zeigt:
Figur 1 ein Prinzipschaltbild für eine Löscheinrichtung für einen Magnetschichtspeicher mit einem Löschkopf mit einer einzigen Spulenwicklung, an die eine Ansteuerschaltung mit Gleichstromversorgung angeschlossen ist und die im Prinzip einen Gleichstrom/Wechselstrom-Wandler darstellt, der den Löschkopf wechselstrommäßig betreibt,
Figur 2 ein Ersatzschaltbild der Schaltungsanordnung gemäß Figur 1,
Figur 3 eine Reihe von Impulsdiagrammen zur Erläuterung der Funktion der Schaltungsanordnung gemäß Figur 1 bzw. 2 und
Figur 4 bzw. 5 jeweils weitere Ausgestaltungen des in Figur 1 dargestellten Schaltungsprinzips.

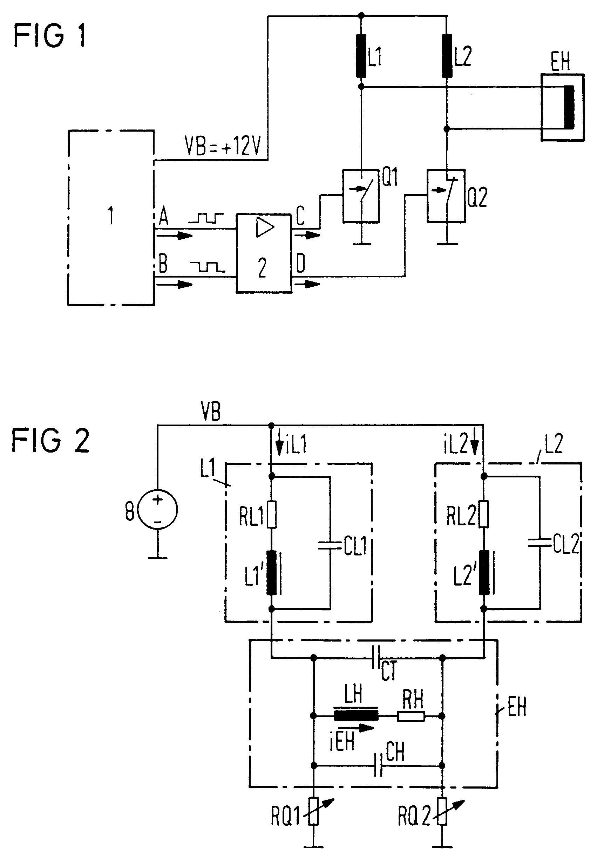

Das in Figur 1 dargestellte Blockschaltbild zeigt eine Steuereinheit 1 beispielsweise eines Magnetbandgerätes, die als Block mit unterbrochenen Linien dargestellt ist. Diese Darstellung deutet an, daß die Steuereinheit keinen Teil der vorliegenden Erfindung bildet. Derartige Steuereinheiten, die insbesondere Ansteuersignale für die Löscheinrichtung abgeben, sind aus einer Vielzahl von Magnetschichtspeichern, beispielsweise Magnetbandgeräten als solche allgemein bekannt und bedürfen daher hier keiner weiteren Erläuterung.

Die Steuereinheit 1 liefert neben einer Versorgungsspannung VB hier auch zwei zueinander exakt gegenphasige Ansteuersignale A bzw. B in Form von zwei Rechteckimpulsfolgen, die in einem Treiberschaltkreis 2 gepuffert und verstärkt werden. Ausgangssignale C, D des Treiberschaltkreises sind damit aus den Ansteuersignalen A bzw. B abgeleitet und sind zueinander ebenfalls möglichst exakt um 180° in der Phase verschoben, d. h. komplementär. Diese Signale werden jeweils einer von zwei Schaltstufen Q1 bzw. Q2 als Schaltsignale zugeführt. Im Blockschaltbild von Figur 1 sind diese Schaltstufen lediglich schematisch dargestellt, sie lassen sich mit einer Vielzahl von handelsüblichen Bauelementen, beispielsweise Schalttransistoren realisieren, die auch als Feldeffekttransistoren ausgebildet sein können. Die Schaltstufen sind jeweils in Serie mit einer von zwei Induktivitäten L1, L2 zwischen der Versorgungsspannung VB und Masse angeordnet. Ein Löschkopf EH ist schematisch mit einer Einzelspule angedeutet, deren Enden jeweils an einen der Verbindungspunkte der Induktivitäten L1 und L2 mit den zugeordneten Schaltstufen Q1 bzw. Q2 angeschlossen sind.

In Figur 2 ist zur Erläuterung der Funktion der in Figur 1 dargestellten Löscheinrichtung ein Ersatzschaltbild dieser Einrichtung dargestellt. Eine Spannungsquelle 8 erzeugt die Versorgungsspannung VB, die parallel den Induktivitäten L1 bzw. L2 zugeführt ist. Dadurch hervorgerufene Spulenströme iL1 bzw. iL2 sind schematisch durch Pfeile angegeben. In den Ersatzschaltbildern der Induktivitäten L1 und L2 liegt zu den Spuleninduktivitäten L1′ und L2′ jeweils ein Verlustwiderstand RL1 bzw. RL2 in Serie. Parallel zu dieser Serienschaltung liegt jeweils eine Streukapazität CL1 bzw. CL2.

An diese Induktivitäten L1 bzw. L2 ist symmetrisch der Löschkopf EH angeschlossen. Das Ersatzschaltbild zeigt eine zwischen beiden Anschlüssen liegende Serienschaltung einer Spuleninduktivität LH und eines Verlustwiderstandes RH der Löschkopfspule. Parallel dazu liegt einerseits eine Streukapazität CH sowie ein Abgleichkondensator CT zum Einstellen der Eigenresonanz des Löschkopfes EH. Dieses Ersatzschaltbild beschreibt die Eigenschaft des Löschkopfes EH samt Anschlußleitung in Form eines verlustbehafteten Parallelschwingkreises. Um eine Bezugsgröße zu illustrieren, ist durch einen nach rechts gerichteten Pfeil eine mögliche Stromrichtung für den Löschstrom iEH als Referenzrichtung festgelegt.

Vervollständigt wird das Ersatzschaltbild von Figur 2 durch zwei mit RQ1 bzw. RQ2 bezeichnete Widerstände, die jeweils an einen der Verbindungspunkte der Induktivitäten L1 bzw. L2 mit dem Löschkopf EH angeschlossen und andererseits an Masse gelegt sind. Im Ersatzschaltbild von Figur 2 ist durch Pfeile angedeutet, daß diese Widerstände RQ1 bzw. RQ2 unterschiedliche Widerstandswerte annehmen können. Damit repräsentieren diese Widerstände schematisch die wechselnden Kanalwiderstände der Schaltstufen Q1 bzw. Q2.

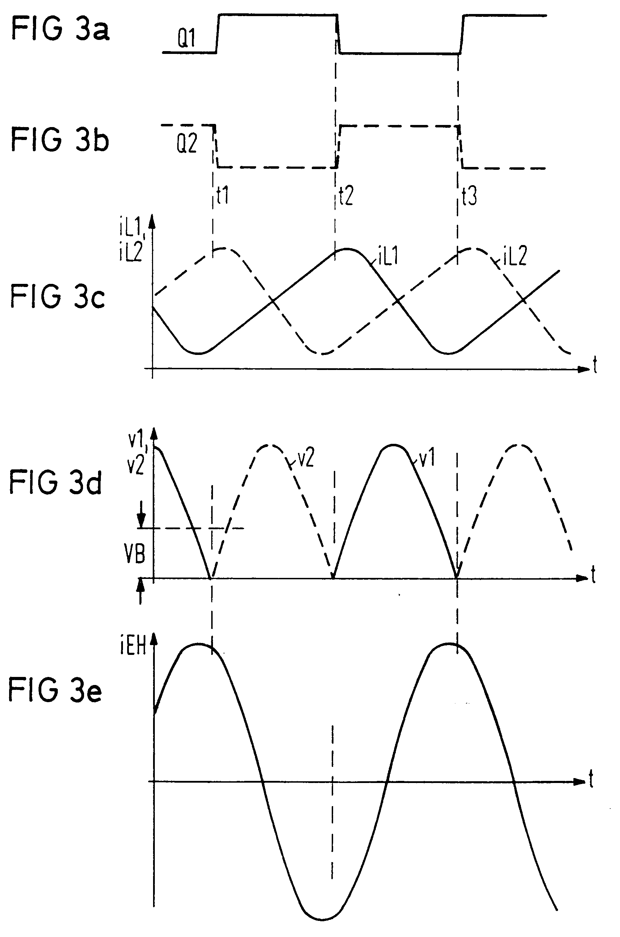

Zusammen mit in Figur 3 dargestellten Impulsdiagrammen wird die Wirkungsweise der Löscheinrichtung anhand des beschriebenen Ersatzschaltbildes im folgenden näher erläutert. Die Schaltungsanordnung weist ein gewisses Einschwingverhalten auf, das aber für die prinzipielle Funktion von untergeordneter Bedeutung ist, da sich die Schaltung bereits nach wenigen Zyklen der durch die Impulsfolgefrequenz der Ansteuersignale A, B vorgegebenen Löschfrequenz bereits stationär arbeitet. Dieser stationäre Zustand ist hier von entscheidender Bedeutung und deshalb sind die Impulsdiagramme von Figur 3 darauf abgestellt.

In Figur 3a und Fig 3b von Figur 3 ist durch je eine Rechteckimpulsfolge - Schaltzeiten sind schematisch angedeutet - das komplementäre Schaltverhalten der Schaltstufen Q1 bzw. Q2 illustriert. In Figur 3c sind die zueinander phasenversetzten, durch die Induktivitäten L1 und L2 fließenden Spulenströme iL1 und iL2 mit durchgezogenen bzw. unterbrochenen Linien dargestellt. In Figur 3d ist der Verlauf von sich an den Induktivitäten L1 und L2 aufbauenden Spannungen v1 bzw. v2 dargestellt, die zeitweilig darin gespeicherte Energie repräsentieren, d. h. dem Quadrat der Spulenströme iL1 bzw. iL2 proportional sind. Figur 3e schließlich illustriert den Verlauf des im Löschkopf EH hervorgerufenen Löschstromes iEH, der in Übereinstimmung mit der in Figur 2 durch den Pfeil angedeuteten Referenzrichtung dargestellt ist.

Wenn in dem in den Impulsdiagrammen dargestellten stationären Zustand der Löscheinrichtung zu einem Zeitpunkt t1 die erste Schaltstufe Q1 durchgeschaltet wird, dann übernimmt sie den Ladestrom, der durch die zugeordnete erste Induktivität L1 fließt und außerdem den Strom, der den Löschkopf EH "pumpt". Ab diesem Zeitpunkt t1 steigt also der durch die erste Induktivität L1 fließende Spulenstrom iL1 verzögert an. Umgekehrt dazu ist das Schaltverhalten der zweiten Schaltstufe Q2, die ab dem Zeitpunkt t1 gesperrt ist. Die durch die vorausgehende Aufladung bis dahin in der zweiten Induktivität L2 gespeicherte Energie sucht sich nun zu entladen. Die Wechselstromimpedanz des Löschkopfes EH ist jedoch relativ groß, infolgedessen baut sich an der zweiten Induktivität L2 nunmehr eine der gespeicherten Energie entsprechende Spannung auf, die sich zur Versorgungsspannung VB hinzuaddiert, wie in Figur 3d schematisch illu striert ist. Die resultierende Drainspannung v2 ist in Figur 3d dargestellt, sie bewirkt einen Löschkopfstrom iEH, der von der Induktivität L2 in den Löschkopf EH "gepumpt" wird und über die erste Schaltstufe Q1 abfließt.

Da die Resonanzfrequenz des Löschkopfes EH auf die Löschfrequenz abgestimmt ist, ist die in der zweiten Induktivität L2 gespeicherte Energie zum Zeitpunkt t2 im wesentlichen abgeflossen und damit auch die Drainspannung v2 abgebaut. Zu diesem Zeitpunkt erfolgt auch der nächste Flankenwechsel der Ansteuersignale A, B, so daß die erste Schaltstufe Q1 sperrt und nunmehr die zweite Schaltstufe Q2 leitet. Damit kehren sich in der zweiten Hälfte des Löschzyklus bis zum Zeitpunkt t3 die Verhältnisse um. Die erste Induktivität L1 entlädt in dem Zeitraum zwischen den Zeitpunkten t2 und t3 ihre Energie in den Löschkopf EH, wodurch sich in diesem die Richtung des Löschkopfstromes iEH umkehrt. Dabei sinkt der Spulenstrom iL1 in diesem Zeitraum von seinem Maximalwert auf ein Minimum ab, bis er mit dem Einsetzen des folgenden Löschzyklus wieder - wie beschrieben - ansteigt.

Das beschriebene Prinzip der Wirkungsweise des Ansteuerschaltkreises für den Löschkopf EH beinhaltet also auch die Funktion eines Gleichspannungs/Wechselspannungswandlers, so daß im Löschkopf EH ein Wechselstrom fließt, dessen Amplitudenspektrum die gewünschten, vorher beschriebenen Eigenschaften aufweist. Außerdem ist es aufgrund des induktiven Verhaltens der geschalteten Induktivitäten L1 und L2 bei entsprechend großer Dimensionierung möglich, auch bei einer niedrigen Versorgungsspannung VB einen ausreichenden Löschkopfstrom iEH auch für hohe Löschfrequenzen zu erzeugen. Prinzipiell betrachtet, benötigt die beschriebene Löscheinrichtung keinen Koppelkondensator, der die Versorgungsgleichspannung VB von den Eingängen des Löschkopfes EH abtrennt. Dennoch ist die beschriebene Schaltungsanordnung außerordentlich störungssicher gegenüber jeder unerwünschten Löschung eines am Löschkopf EH vorbeibewegten Aufzeichnungsträgers. Beide Enden der einzigen Spule des Löschkopfes EH sind an die Versorgungsspannung VB über die Induktivitäten L1 bzw. L2 angeschlossen, die einen sehr niedrigen Gleichstromwiderstand besitzen. Daraus ergibt sich weiterhin ein sehr guter Schutz gegenüber Störungen in der Anschaltphase.

Schließlich wurde einleitend die besondere Bedeutung des symmetrischen Schaltverhaltens bei derartigen Löscheinrichtungen dargelegt. Im vorliegenden Fall ist diese Symmetrie zunächst einmal dadurch gegeben, daß der Löschkopf EH lediglich eine einzige Spule aufweist, die wechselstrommäßig betrieben wird. Daneben wird die Symmetrie insbesondere auch durch die Charakteristiken sowohl der beiden Schaltstufen Q1 und Q2 als auch der beiden Induktivitäten L1 und L2 beeinflußt. Dabei kommt es darauf an, daß sich die Charakteristiken der Schaltstufen Q1 und Q2 einerseits und der Induktivitäten L1 und L2 andererseits relativ betrachtet mit guter Annäherung gleichen. Relativ betrachtet, soll hier heißen, daß die in einer Schaltung paarweise eingesetzten Schaltstufen Q1 und Q2 bzw. Induktivitäten L1 und L2 möglichst identische Charakteristiken aufweisen. Die Schaltstufen Q1 und Q2 werden vorzugsweise in Form von Schalttransistoren realisiert. Hier kann man ohne weiteres davon ausgehen, daß ein Paar von Schalttransistoren aus derselben Fertigungsserie diesen Anforderungen genügt. Ähnliches gilt auch für die paarweise zusammengestellten Induktivitäten L1 und L2.

Im beschriebenen Ausführungsbeispiel wurde davon ausgegangen, daß die Versorgungsspannung VB + 12 V beträgt. Dies ist aber nur eine Möglichkeit. Denn man hat es durch eine entsprechende Ausgestaltung des Löschkopfes EH in der Hand, einerseits durch Erhöhung der Lindungszahl der Löschkopfwicklung LH den Löschkopfstrom iEH zu senken. Mit der Erhöhung der Windungszahl der Löschkopfwicklung läßt sich andererseits auch deren Spulengüte Q und damit zugleich die Filterwirkung des abgestimmten Löschkopfsystemes weiter verbessern. Eine zweite Konsequenz dieser Maßnahme ist, daß dann auch die Versorgungsspannung VB auf beispielsweise + 4 V herabsetzbar ist, ohne die ,gewünschte Löschfunktion zu beeinträchtigen.

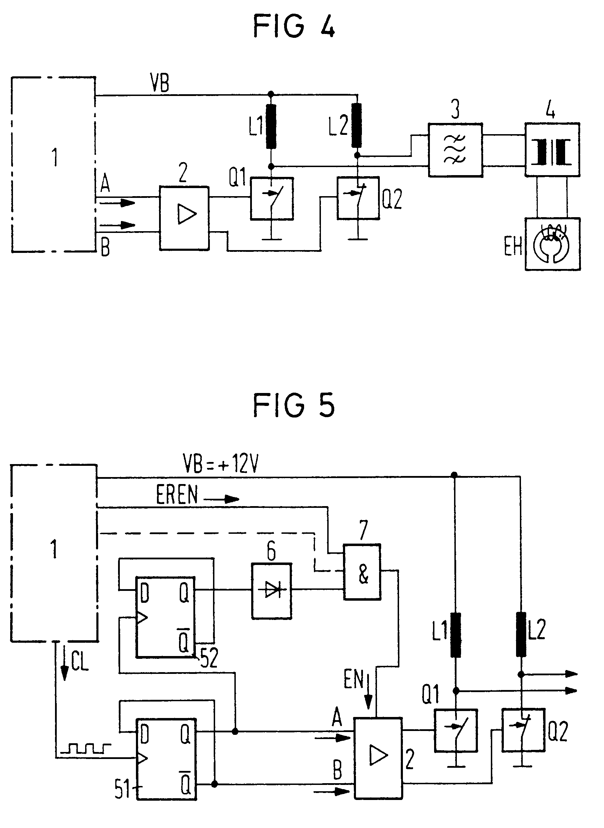

In Figur 4 ist eine weitere Ausführungsform der beschriebenen Löscheinrichtung dargestellt. Sie enthält, über das bereits anhand von Figur 1 erläuterte Schaltungsprinzip hinausgehend, ein zusätzliches symmetrisches Filter 3 sowie einen Übertrager 4, die in Serie zwischen der ansteuerschaltung mit dem Induktivitäten L1, L2 und den Schaltstufen Q1 und Q2 einerseits und dem Löschkopf EH andererseits angeordnet sind. Wie erläutert, bildet die Anschlußleitung für den Löschkopf EH mit einer gewissen als Streukapazität wirkenden Leitungskapazität sowie der Abgleichkondensator CT zusammen mit der Induktanz der Löschkopfspule LH, wie in Figur 2 dargestellt, einen verlustbehafteten Parallelschwingkreis. Dieser ist mit anderen Worten ein Filter zur Unterdrückung von Oberwellen insbesondere 2n-ter Ordnung. Die Wirkung dieses Grundfilters läßt sich durch das symmetrische Filter 3, das in an sich bekannter Weise ausgebildet sein kann, weiter unterstützen. Allerdings unterdrücken übliche symmetrische Filter gleichzeitig auch Oberwellen von (2n+1)-ter Ordnung. Im vorgegebenen Fall bedeutet dies einen gewissen Verlust, da diese Oberwellen zum wirksamen Löschkopfstrom iEH beitragen können. Es wurde aber gezeigt, daß das Schaltungsprinzip genügend flexibel ist, um gegebenenfalls den Spulenstrom soweit zu erhöhen, um diesen Verlust im Interesse einer noch besseren Störungsunterdrückung in Kauf nehmen zu können.

Als weitere mögliche Schaltungseinheit zeigt Figur 4 den schematisch angedeuteten Übertrager 4. Dieser Übertrager kann zur Impedanzanpassung benutzt werden, wenn Dünnfilm-Magnetköpfe das Magnetkopfsystem bilden. Gegebenenfalls ist ein Übertrager an sich bereits notwendig, um den Löschstrom in einen rotierenden Löschkopf einzukoppeln. Solche rotierenden Magnetkopfsysteme werden unter anderem bei Audio- oder Videorecordern, gelegentlich aber auch bei Datenspeichern eingesetzt.

In Figur 5 ist eine weitere ausführungsform dargestellt, die insbesondere dazu dient, die weitere Einflußgröße für die Symmetriewirkung der Schaltungsanordnung zu verbessern. Eine wesentliche Einflußgröße für die symmetrische Funktion der Schaltungsanordnung liegt in den möglichst exakt eingehaltenen Tastverhältnis der komplementären Rechteckimpulsfolgen der die Schaltstufen Q1 bzw. Q2 ansteuernden Signale. Im vorliegenden Fall kommt es darauf an, die Einschaltzeiten der Schaltstufen Q1 bzw. Q2 möglichst identisch auf 50 % der Periode der Löschfrequenz festzulegen. Die logischen Elemente vieler kostengünstiger und handelsüblicher Schaltkreistechniken weisen systembedingte Schaltzeiten bzw. Schaltkreisverzögerungen auf, die im vorliegenden Fall diese genannten Randbedingungen nicht hinreichend genau erfüllen.

Dieses Problem läßt sich dadurch lösen, daß man zwei, in einem Schaltkreis einer schnellen Schaltkreistechnik vereinigte D-Flipflops 51 bzw. 52 dazu verwendet, die Ansteuersignale A bzw. B für die Schaltstufen Q1 und Q2 in der Löscheinrichtung selbst zu erzeugen und gleichzeitig diese Funktion zu überwachen. Zu diesem Zweck wird von der Steuereinheit 1 eine hochfrequente Taktimpulsfolge CL mit der doppelten Löschfrequenz abgegeben und dem einen D-Flipflop 51 als Steuersignal zugeführt. Dessen invertierender Ausgang ist auf seinen D-Eingang zurückgekoppelt. Dieses D-Flipflop untersetzt also die zugeführte Taktimpulsfolge CL im Verhältnis 1:2 und gibt an seinen beiden Ausgängen die ansteuersignale A bzw. B für die Löscheinrichtung ab. Diese Ansteuersignale werden, wie bereits geschildert, dem an den die Schaltstufen Q1 bzw. Q2 angeschlossenen Treiberschaltkreis 2 zugeführt.

Nun kann in einem fehlerhaften Betriebszustand die Taktimpulsfolge CL ausfallen. Dies würde bedeuten, daß sich die Schaltzustände des ersten D-Flipflops 51 und damit auch der Schaltstufen Q1 und Q2 nicht mehr ändern. Dies könnte zu einem völlig unerwünschten Betriebszustand, gegebenenfalls sogar zu einem Ausfall der Löscheinrichtung führen. Ein solcher Fehlerfall wird mit dem zweiten D-Flipflop 52 vermieden, dessen invertierender Ausgang ebenfalls auf seinen D-Eingang rückgekoppelt ist. Das Taktsignal für dieses zweite D-Flipflop 52 bildet das Signal am normalen Ausgang des ersten D-Flipflops 51. Damit ist zunächst sichergestellt, daß das erste D-Flipflop im wesentlichen symmetrisch belastet ist, was sich auf sein Schaltverhalten weiterhin symmetrierend auswirkt. Außerdem stellt das zweite D-Dlipflop 52 einen Zwischenspeicher für einen an seinen normalen Ausgang angeschlossenen Spitzendetektor 6 dar, der als Analogdetektor mit einer angepaßt kurzen Abfallzeit ausgebildet sein soll. Mit dieser Funktion des Spitzendetektors 6 ist sichergestellt, daß er nur solange ein entsprechendes Ausgangssignal abgibt, solange er in vorgegebenen Abständen wieder angestoßen wird.

Dieses Ausgangssignal des Spitzenwertdetektors wird einer UND-Schaltung 7 zugeführt. Damit hat man die Möglichkeit, weitere Steuersignale einzukoppeln. Beispielhaft ist hier in Figur 5 ein von der Steuereinheit 1 abgegebenes Löschfunktionssignal EREN angedeutet. Dieses ist ein Zustandssignal, dessen hoher Pegel die Löscheinrichtung in den aktiven Zustand setzt. An den jeweiligen Anwendungsfall angepaßt, könnten der UND-Schaltung 7 zusätzlich weitere, den Betriebszustand definierende Steuersignale zugeführt werden. Die der UND-Schaltung 7 zugeführten Signale werden in dieser miteinander logisch verknupft, um damit ein Freigabesignal EN für die Löscheinrichtung zu generieren, mit dem die einzelnen Stufen des Treiberschaltkreises 2 aktiviert werden.

Damit ist sichergestellt, daß sowohl beim Ausfall der Taktimpulsfolge CL als auch bei bestimmten vorgegebenen Betriebszuständen des Magnetschichtspeichergerätes, die je nach Anwendungsfall variieren können, die Schaltstufen Q1 und Q2 der Löscheinrichtung lediglich dann ansteuerbar sind, wenn tatsächlich ein Löschvorgang erfolgen soll und auch einwandfrei ausgeführt werden kann.

## Patentansprüche

1. Löscheinrichtung für einen Magnetschichtspeicher mit Relativbewegung des Speichermediums gegenüber einem kombinierten Magnetkopfsystem einschließlich eines magnetischen Löschkopfes (EH) mit einer einteiligen Spulenwicklung (LH), deren beide wicklungsenden an einen Pol einer Gleichspannungsquelle (VB) über je eine Schaltstufe (Q1, Q2) angeschlossen sind, die in Abhängigkeit von einer hochfrequenten Steuerimpulsfolge (A, B bzw. CL) in der Wicklung des Löschkopfes einen Wechselstrom (iEH) mit vorgegebener Löschfrequenz hervorrufen, wobei beide Wicklungsenden des Löschkopfes über je eine Induktivität (L1, L2) mit dem anderen Pol der Gleichspannungsquelle verbunden sind und über die Schaltstufen (Q1, Q2) auf ein von der Gleichspannungsquelle abweichendes Potential legbar sind, wobei die Steuerimpulsfolgen invers symmetrisch sind und die Schaltstufen (Q1, Q2) durch die Steuerimpulsfolge alternativ für identische Zeitspannen aktivierbar sind.

2. Löscheinrichtung nach Anspruch 1, dadurch gekennzeichnet, daß er einen Abgleichkondensator (CT) zum Abgleichen der Eigenresonanz des Löschkopfes auf die Löschfrequenz aufweist.

3. Löscheinrichtung nach Anspruch 1, dadurch gekennzeichnet, daß jede der Schaltstufen (Q1, Q2) gleichartige Schalttransistoren, insbesondere Feldeffekttransistoren mit besonders kurzen Schaltzeiten, aufweist und daß ein Treiberschaltkreis (2) vorgesehen ist, der an die Steuereingänge der Schaltstufen (Q1, Q2) geschaltet ist und die Steuerimpulsfolgen empfängt, verstärkt und die verstärkten Steuerimpulse an die Steuereingänge der Schaltstufen (Q1, Q2) gibt und diese treibt.

4. Löscheinrichtung nach Anspruch 1, dadurch gekennzeichnet, daß die Gleichspannungsquelle (VB) als positive Spannungsquelle ausgebildet ist und daß die Schalttransistoren (Q1, Q2) mit ihrer Schaltstrecke zwischen je einem Verbindungspunkt der Induktivitäten (L1 bzw. L2) mit je einem der Wicklungsenden des Löschkopfes (EH) einerseits und Masse als Referenzpotential andererseits angeordnet sind.

5. Löscheinrichtung nach einem der Ansprüche 1 bis 4, dadurch gekennzeichnet, daß ein symmetrisch ausgebildeter Oberwellenfilter (3), der zwischen den Verbindungspunkten der Induktivitäten (L1, L2) mit den Schaltstufen (Q1 bzw. Q2) und den Wicklungsenden des Löschkopfes (EH) angeordnet ist, vorgesehen ist.

6. Löscheinrichtung nach Anspruch 5, dadurch gekennzeichnet, daß am Eingang des Löschkopfes, bevorzugt zwischen dem symmetrisch abgebildeten Oberwellenfilter (3) und den Wicklungsenden des Löschkopfes (EH) ein Übertrager (4), insbesondere zur Impedanzanpassung angeordnet ist.

7. Löscheinrichtung nach einem der Ansprüche 3 bis 6, dadurch gekennzeichnet, daß ein in sich rückgekoppeltes D-Flipflop (51) zur Frequenzuntersetzung vorgesehen ist, dessen Steuereingang eine Taktimpulsfolge (CL) von doppelter Löschfrequenz zugeführt ist und dessen beide zueinander inverse Ausgänge mit den beiden Eingängen des Treiberschaltkreises (2) verbunden sind.

8. Löscheinrichtung nach Anspruch 7, dadurch gekennzeichnet, daß ein weiteres D-Flipflop (52) vorgesehen ist, daß durch eines der Ausgangssignale des ersten D-Flipflops (51) angesteuert und fortgeschaltet wird und daß ein an dieses zweite D-Flipflop angeschalteter analoger Spitzendetektor (6) mit einer an die Löschfrequenz angepaßten Erholungszeit vorgesehen ist, dessen Ausgang mit einem Freigabeeingang zum Zuführen eines Freigabesignales (EN) verbunden ist.

9. Löscheinrichtung nach Anspruch 8, dadurch gekennzeichnet, daß eine UND-Schaltung (7) vorgesehen ist, deren einer Eingang mit dem Ausgang des Spitzenwertdetektors (6) verbunden ist und die mindestens einen weiteren Eingang zum Zuführen eines Freigabesignales (EREN) für die Löschfunktion, gegebenenfalls weitere Eingänge zum Zuführen von den Betriebszustand der Löscheinrichtung zusätzlich überwachenden Zustandssignalen des Magnetschichtspeichers besitzt und deren Ausgang mit dem das Freigabesignal (EN) empfangenden Freigabeeingang des Treiberschaltkreises (2) verbunden ist.

10. Löscheinrichtung nach einem der Ansprüche 1 bis 9, dadurch gekennzeichnet, daß das Magnetschichtspeichermedium ein Datenspeicher ist, insbesondere ein Magnetband in einem Magnetbandkassettengerät, bei dem die Löschfrequenz mehr als 5 MHz beträgt.

11. Verwendung einer Löscheinrichtung nach einem der Ansprüche 1 bis 9 in einem Audiorecorder.

12. Verwendung einer Löscheinrichtung nach einem der Ansprüche 1 bis 9 in einem Videorecorder.

## Claims

1. An erase device for a magnetic film memory in which the memory medium moves relatively to a combined magnetic head system including a magnetic erase head (EH) with a one-part coil winding (LH), the two ends of which are connected to one terminal of a DC voltage source (VB) via a respective switching stage (Q1, Q2) and, in dependence on a high-frequency control-pulse sequence (A, B or CL), generate an AC current (iEH) with a preset erase frequency in the winding of the erase head, the two ends of the erase-head winding each being connected by an inductance (L1, L2) to the other terminal of the DC voltage source and being adapted for connection via the switching stages (Q1, Q2) to a potential differing from the DC voltage source, the control pulse sequences being inversely symmetrical and the control stages (Q1, Q2) being activatable by the control-pulse sequence alternately for identical lengths of time.

2. An erase device according to claim 1, characterised in that it comprises a trimming capacitor (CD) for adjusting the natural resonance of the erase head to the erase frequency.

3. An erase device according to claim 1, characterised in that each switching stage (Q1, Q2) comprises identical switching transistors, more particularly field-effect transistors with very short switching times, and a driver circuit (2) is provided and is connected to the control inputs of the switching stages (Q1, Q2) and receives and amplifies the control pulse sequences and delivers the amplified control pulses to the control inputs of the switching stages (Q1, Q2), which it drives.

4. An erase device according to claim 1, characterised in that the DC voltage source (VB) is a positive voltage source and the switching transistors (Q1, Q2) are disposed with their switching section between a respective point connecting the inductances (L1, L2) to a respective end of the erase-head (EH) winding on the one hand and earth as the reference potential on the other hand.

5. An erase device according to any of claims 1 to 4, characterised in that a symmetrically constructed harmonic filter (3) is provided and is disposed between the ends of the erase-head (EH) winding and the points where the inductances (L1, L2) are connected to the switching stages (Q1, Q2).

6. An erase device according to claim 5, characterised in that a transformer (4), more particularly for impedance matching, is disposed at the erase-head input, preferably between the symmetrically constructed harmonic filter (3) and the ends of the erase-head (EH) winding.

7. An erase device according to any of claims 3 to 6, characterised in that a D-flipflop (51) with internal feedback is provided for stepping down the frequency and its control input is supplied with a clock pulse sequence (CL) of twice the erase frequency and its two mutually inverted outputs are connected to the two inputs of the driver circuit (2).

8. An erase device according to claim 7, characterised in that an additional D-flipflop (52) is provided and is actuated and switched forward by one of the output signals of the first D-flipflop (51), and an analog peak detector (6) connected to the second D-flipflop is provided and has a recovery time adapted to the erase frequency and its output is connected to a release input for supplying a release signal (EN).

9. An erase device according to claim 8, characterised in that an AND circuit (7) is provided and one input thereof is connected to the output of the peak-value detector (6) and it has at least one additional input for supplying a release signal (EREN) for the erase function and optional other inputs for supplying state signals of the magnetic film memory additionally monitoring the operating state of the erase device, the output of the AND circuit being connected to the release input of the driver circuit (2) receiving the release signal (EN).

10. An erase device according to any of claims 1 to 9, characterised in that the magnetic film memory medium is a data memory, more particularly a magnetic tape in a magnetic-tape cassette device having an erase frequency greater than 5 MHz.

11. Use of an erase device according to any of claims 1 to 9 in an audio recorder.

12. Use of an erase device according to any of claims 1 to 9 in a video recorder.

## Revendications

1. Dispositif d'effacement d'une mémoire à couche magnétique ayant un mouvement du support d'information par rapport à un système de têtes magnétiques combiné comprenant une tête magnétique d'effacement (EH) comportant un enroulement de bobine d'une seule pièce (LH) dont les deux extrémités sont reliées à un pôle d'une source de tension continue (VB) chacune par l'intermédiaire d'un étage de commutation (Q1,Q2) qui produit dans l'enroulement de la tête d'effacement, en fonction d'un train d'impulsions de commande à haute fréquence (A, B ou CL), un courant alternatif (iEH) de fréquence d'effacement fixée, les deux extrémités de l'enroulement de la tête d'effacement étant reliées chacune par l'intermédiaire d'une inductance (L1, L2) à l'autre pôle de la source de tension continue et pouvant être mises, par l'intermédiaire des étages de commutation (Q1, Q2), à un potentiel différent de la source de tension continue, les trains d'impulsions de commande étant inversement symétriques et les étages de commutation (Q1,Q2) pouvant être activés alternativement pour des laps de temps identiques par le train d'impulsions de commande.

2. Dispositif d'effacement selon la revendication 1, caractérisé par le fait qu'il présente un condensateur d'alignement (CT) pour l'alignement de la résonance propre de la tête d'effacement sur la fréquence d'effacement.

3. Dispositif d'effacement selon la revendication 1, caractérisé par le fait que chacun des étages de commutation (Q1, Q2) présente des transistors de commutation identiques, en particulier des transistors à effet de champ à temps de commutation particulièrement court, et qu'il est prévu un circuit commutateur de commande (2) qui est connecté aux entrées de commande des étages de commutation (Q1, Q2) et reçoit les trains d'impulsions de commande, les amplifie et envoie les impulsions de commande amplifiées aux entrées de commande des étages de commutation (Q1, Q2) et actionne ceux-ci.

4. Dispositif d'effacement selon la revendication 1, caractérisé par le fait que la source de tension continue (VB) est une source de tension positive et que le circuit principal des transistors de commutation (Q1, Q2) est monté entre, d'une part, un point de raccordement des inductances (L1 ou L2) à une des extrémités de l'enroulement de la tête d'effacement (EH) et, d'autre part, la masse comme potentiel de référence.

5. Dispositif d'effacement selon l'une des revendications 1 à 4, caractérisé par le fait qu'il est prévu un filtre d'harmoniques symétrique (3) qui est monté entre les points de raccordement des inductances (L1,L2) aux étages de commutation (Q1 ou Q2) et les extrémités de l'enroulement de la tête d'effacement (EH).

6. Dispositif d'effacement selon la revendication 5, caractérisé par le fait qu'un transformateur (4), en particulier pour l'adaptation d'impédance, est monté à l'entrée de la tête d'effacement, de préférence entre le filtre d'harmoniques symétrique (3) et les extrémités de l'enroulement de la tête d'effacement (EH).

7. Dispositif d'effacement selon l'une des revendications 3 à 6, caractérisé par le fait qu'il est prévu une bascule D rebouclée sur elle-même en diviseur (Flip-Flop 51) pour la division de fréquence, à l'entrée de commande de laquelle est envoyé un train d'impulsions d'horloge (CL) de fréquence double de la fréquence d'effacement et dont les deux sorties, inverses l'une de l'autre, sont reliées aux deux entrées du circuit commutateur de commande (2).

8. Dispositif d'effacement selon la revendication 7, caractérisé par le fait qu'il est prévu une autre bascule D montée en diviseur (52) qui est commandée et indexée par un des signaux de sortie de la première bascule D (51), et qu'il est prévu un détecteur de crêtes analogique (6) connecté à cette deuxième bascule D montée en diviseur, ayant un temps de recouvrement adapté à la fréquence d'effacement et dont la sortie est reliée à une entrée de déblocage pour l'envoi d'un signal de déblocage (EN).

9. Dispositif d'effacement selon la revendication 8, caractérisé par le fait qu'il est prévu un circuit ET (7) dont une entrée est reliée à la sortie du détecteur de valeurs de crête (6) et qui a au moins une autre entrée pour l'envoi d'un signal (EREN) de déblocage de la fonction d'effacement, éventuellement d'autres entrées pour l'envoi de signaux d'état de la mémoire à couche magnétique contrôlant en plus l'état de fonctionnement du dispositif d'effacement, et dont la sortie est reliée à l'entrée de déblocage du circuit de commutation d'attaque (2) qui reçoit le signal de déblocage (EN).

10. Dispositif d'effacement selon l'une des revendications 1 à 9, caractérisé par le fait que le support d'information à couche magnétique est une mémoire de données, en particulier une bande magnétique dans un appareil à cassettes de bande magnétique, pour laquelle la fréquence d'effacement est supérieure à 5 MHz.

11. Utilisation d'un dispositif d'effacement selon l'une des revendications 1 à 9 dans un enregistreur audio.

12. Utilisation d'un dispositif d'effacement selon l'une des revendications 1 à 9 dans un enregistreur vidéo.
